# EUROPÄISCHE PATENTSCHRIFT

(11) **EP 1 163 557 B1**
(45) Veröffentlichungstag und Bekanntmachung des Hinweises auf die Patenterteilung: **20.08.2003**
(21) Anmeldenummer: 00922431.2
(22) Anmeldetag: 13.03.2000
(51) Int. Cl.: G05B 19/409, G05B 23/02

(54) **SYSTEM UND VERFAHREN ZUR DOKUMENTATIONSVERARBEITUNG MIT MEHRSCHICHTIGER STRUKTURIERUNG VON INFORMATIONEN, INSBESONDERE FÜR TECHNISCHE UND INDUSTRIELLE ANWENDUNGEN**
SYSTEM AND METHOD FOR PROCESSING DOCUMENTS WITH A MULTI-LAYER INFORMATION STRUCTURE, IN PARTICULAR FOR TECHNICAL AND INDUSTRIAL APPLICATIONS
SYSTEME ET PROCEDE DE TRAITEMENT D'UNE DOCUMENTATION AVEC STRUCTURATION MULTICOUCHE D'INFORMATIONS, EN PARTICULIER POUR APPLICATIONS TECHNIQUES ET INDUSTRIELLES

(30) Priorität: 25.03.1999 DE 19913678
(43) Veröffentlichungstag der Anmeldung: 19.12.2001
(73) Patentinhaber: SIEMENS AKTIENGESELLSCHAFT, 80333 München (DE)
(72) Erfinder: FRIEDRICH, Wolfgang, D-91088 Bubenreuth (DE); WOHLGEMUTH, Wolfgang, D-91058 Erlangen (DE)
(86) Internationale Anmeldenummer: DE0000782
(87) Internationale Veröffentlichungsnummer: WO00058799

(56) Entgegenhaltungen:
- EP-A- 0 597 127
- EP-A- 0 708 392
- DE-A- 19 716 327
- GB-A- 2 327 289
- US-A- 5 644 493
- US-A- 5 712 649
- US-A- 5 812 394
- US-A- 5 850 352

## Beschreibung

Die Erfindung betrifft ein System und ein Verfahren zur Dokumentationsverarbeitung insbesondere für technische und industrielle Anwendungen.

Ein derartiges System und Verfahren kommt beispielsweise im Zusammenhang mit sogenannten Augmented-Reality-Techniken zum Einsatz. Dabei geht es um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Aus der GB 2 327 289 ist eine Vorrichtung zur Arbeitsunterstützung bekannt, die einem Fließbandarbeiter mittels eines Displays gleichzeitig Instruktionen zur auszuführenden Arbeit und Informationen über Ergebnisse dieser Arbeit visualisiert. Die Arbeitsergebnisse werden durch Messmittel oder durch Eingabe einer spezifischen Teilenummer durch den Arbeiter erfasst, der Arbeitsprozess wird mit Kameras aufgenommen.

Der Erfindung liegt die Aufgabe zugrunde, ein System und ein Verfahren anzugeben, das einen situationsgerechten schnellen Zugriff auf gespeicherte Dokumentationsdaten ermöglicht.

Diese Aufgabe wird durch ein System sowie durch ein Verfahren mit den in den Ansprüchen 1 bzw. 6 angegebenen Merkmalen gelöst.

Bei den Dokumentationsdaten kann es sich beispielsweise um bei der Errichtung einer Anlage oder eines Automatisierungssystems erstellte und gesammelte Daten und/oder auch im Betrieb einer Anlage oder eines Automatisierungssystems nach vorgebbaren Kriterien gepflegte und jeweils aktualisierte Dokumentationsdaten handeln. Diese Dokumentationsdaten können auf Speichermittel gespeichert sein, die sowohl lokal, d.h. am Ort der jeweiligen Anwendung oder auch an jeden beliebig anderen Ort, beispielsweise am Ort der jeweiligen Herstellerfirmen der einzelnen Anlagenkomponenten, gespeichert werden. Mit Hilfe der Erfassungsmittel werden beispielsweise aus einem Bildinhalt die realen Informationen erfaßt und über die Auswertemittel ausgewertet, so daß eine Zuordnung der realen Objekte zu in den Dokumentationsdaten gespeicherten Objektdaten möglich wird. Anhand der realen Informationsdaten, beispielsweise in Form eines detektierten Objekts werden dann insbesondere automatisch die zusätzlichen in dem Dokumentationsdaten enthaltenen Objektdaten ausgewählt und beispielsweise für Servicezwecke vor Ort zur Verfügung gestellt. Hierdurch wird ein situationsgerechter schneller Zugang zu den jeweils benötigten Daten ermöglicht.

Eine komponentenorientierte Unterstützung durch die gespeicherten Dokumentationsdaten kann dadurch sichergestellt werden, daß die Dokumentationsdaten objektorientiert gespeichert sind. Als reales Objekt wird beispielsweise ein Tank einer Anlage erfaßt und identifiziert, wobei die diesem Objekt "Tank" zugeordneten Dokumentationsdaten, beispielsweise Baujahr, Fassungsvermögen, etc. visualisiert werden.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein anwendergesteuerter Zugriff auf die Dokumentationsdaten kann dadurch erzielt werden, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augemted-Reality-Techniken auf Basis der gespeicherten Dokumentationsdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zur Dokumentationsverarbeitung,
- FIG 2: ein Anwendungsbeispiel eines Systems zur Dokumentationsverarbeitung für Service und Wartung und
- FIG 3: ein Anwendungsbeispiel für einen situationsgerechten Zugriff auf Dokumentationsdaten.

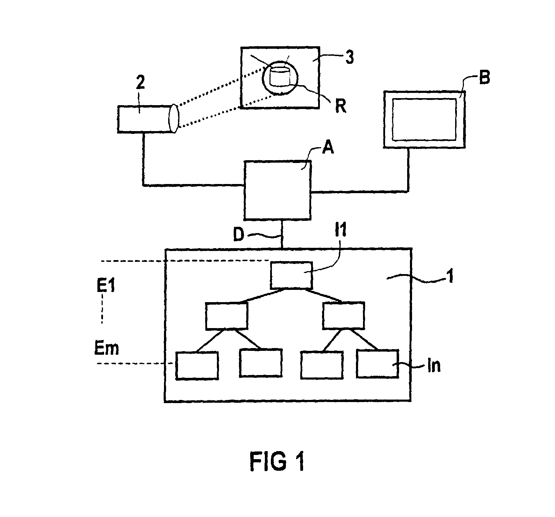

Figur 1 zeigt ein Blockschaltbild eines Systems zur strukturierten Dokumentationsverarbeitung unter Zuhilfenahme von auch Augmented-Reality-Techniken. Das System umfaßt Speichermittel 1 zur Speicherung von Dokumentationsdaten I1..In. Die Dokumentationsdaten I1..In sind in mehreren Ebenen E1..Em gespeichert. Über eine Datenverbindung D sind die Speichermittel 1 mit Auswertemitteln A koppelbar, wobei die Auswertemittel A mit Erfassungsmitteln 2 und Visualisierungsmitteln koppelbar sind. Die Erfassungsmittel 2 sind bei den in Figur 1 dargestellten Ausführungsbeispiel als Kamera und die Visualisierungsmittel B als Bildschirm dargestellt. Bei einer anderen Ausführungsform kann es sich bei den Erfassungsmitteln 2 und den Visualisierungsmitteln B jedoch auch um eine Datenbrille mit integrierter Videokamera handeln. Die Erfassungsmittel 2 dienen zur Erfassung von realen Informationen R, beispielsweise von einzelnen Komponenten einer industriellen Anlage und/oder einer Automatisierungsanlage.

Figur 1 bildet die Grundstruktur eines Systems zur Dokumentationsverarbeitung unter Anwendung von Augmented-Reality-Techniken mit in verschiedenen Ebenen gespeicherten Dokumentationsdaten I1..In. Ein Anwendungsszenario sieht dabei folgendermaßen aus: Mit Hilfe der Erfassungsmittel 2 werden reale Informationen, beispielsweise eine Anlage in Form von Bildinformationen erfaßt. Diese realen Informationen R werden mit Hilfe der Auswertemittel A dahingehend ausgewertet, einzelne Objekte, d.h. beispielsweise einzelne Komponenten eines Automatisierungssystems zu detektieren. Dies kann beispielsweise in Form von an den realen Objekten angebrachten Zusatzinformationen, beispielsweise durch Bar-Code-Aufkleber erfolgen oder durch Vergleich der Bildinformationen mit in den Auswertemitteln A und/oder den Dokumentationsdaten 1 gespeicherten Vergleichsdaten. Nach Ermittlung eines gewünschten Objekts, welches mit der realen Information R korrespondiert, werden automatisch und/oder vom Anwender gesteuert die in mehreren Ebenen El..Em gespeicherten Dokumentationsdaten aufgerufen und über die Visualisierungsmittel B dem Anwender 7 mit Hilfe der Visualisierungsmittel B dargestellt. Diese Dokumentationsdaten I1..In bilden eine Zusatzinformation, die den Anwender 7 beispielsweise bei der Reparatur, bei der Wartung, etc. unterstützen. Er enthält einen situationsgerechten schnellen Zugriff auf die jeweils benötigten Daten. Die Dokumentationsdaten I1..In können dabei entweder vor Ort beispielsweise auf einer Datenverarbeitungsvorrichtung gespeichert sein oder auch an entfernten Orten, wobei in diesem Fall ein Zugriff auf die Informationsdaten I1..In beispielsweise über Internetanbindung erfolgen kann.

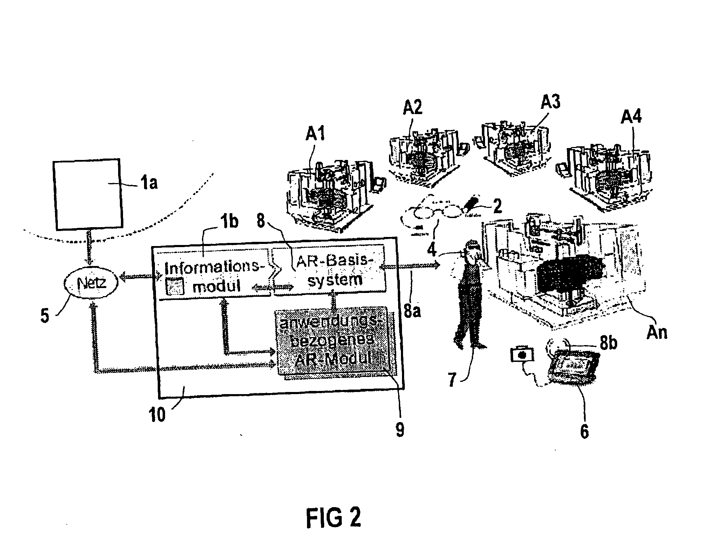

Figur 2 zeigt ein Anwendungsbeispiel eines Systems zur Dokumentationsverarbeitung für Service und Wartung. Das System besteht aus einem Augmented-Reality-System 10, welches im folgenden auch abkürzend als AR-System bezeichnet wird. Das AR-System enthält ein Informationsmodul 1b, zur Speicherung von Informationsdaten, ein AR-Basissystem 8 sowie ein AR-Anwendungsmodul. Das AR-System ist über eine Netzanbindung 5, beispielsweise eine Internetverbindung mit weiteren Speichermitteln 1a verbindbar. Die Anwenderkommunikation zwischen einem Anwender 7 und dem AR-System 10 erfolgt über Schnittstellen 8a, 8b. Hierzu weist das AR-System eine Sende-Empfangs-Vorrichtung auf, die eine bidirektionale Datenkommunikation zwischen dem AR-System und dem Anwender 7 über eine Datenbrille 4 entweder direkt über die Schnittstelle 8a oder über ein im Bereich des Anwenders 7 angeordnete Funk-Sende-Empfangs-Einrichtung 6 mit einer Schnittstelle 8b zum Anwender 7 ermöglicht. Bei dem Anwender 7 handelt es sich beispielsweise um einen Servicetechniker, der zur Wartung von Anlagen A1..An eingesetzt wird. Mit Hilfe der Datenbrille 4 ist es für den Anwender 7 möglich, sich frei in den Anlagen A1..An zu bewegen.

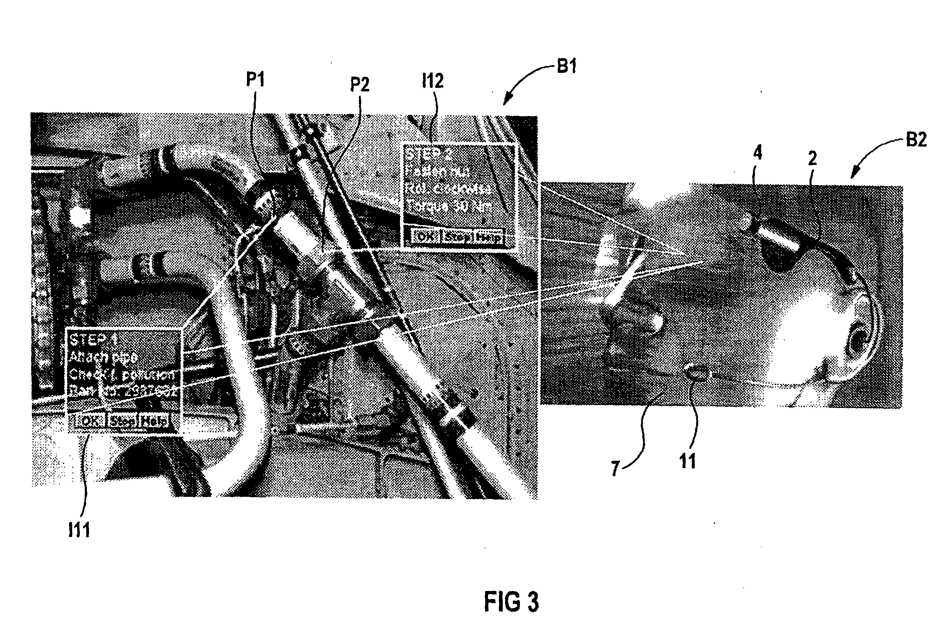

Die Funktionsweise des in Figur 3 dargestellten Systems entspricht im wesentlichen den bereits im Zusammenhang mit Figur 1 erläuterten Funktionsweisen. Der Anwender 7 betrachtet beispielsweise eine einzelne Anlagenkomponente. Mit Hilfe der auf der Datenbrille 4 angeordneten Kamera, die als Erfassungsmittel dient, werden die realen Informationen an das AR-System 10 übertragen. Dort erfolgt eine Auswertung der realen Informationen und ein Zugriff auf die in den ersten Speichermitteln 1a oder den zweiten Speichermitteln 1b gespeicherten Dokumentationsdaten. Die Dokumentationsdaten werden dem Anwender 7 über eine in der Datenbrille 4 angeordnete Visualisierungseinrichtung visualisiert und objektorientiert und situationsgerecht zur Verfügung gestellt.

Figur 3 zeigt ein Anwendungsbeispiel für einen situationsgerechten Zugriff auf Dokumentationsdaten. Hierzu ist in einem linken Bildausschnitt B1 ein Blick auf Rohrleitungen dargestellt, die mit einen in einem Bildfenster B2 dargestellten Datenbrille 4 betrachtet werden können. An der Datenbrille 4 sind Erfassungsmittel 2, beispielsweise in Form einer Videokamera angeordnet. Im linken Bild B1 sind zwei Punkte P1, P2 markiert, die jeweils zwei mit Hilfe der Datenbrille 4 betrachtete Bildausschnitte repräsentieren. Bei Betrachtung des ersten Punktes P1, d.h. bei Betrachtung der im Bereich des Punktes P1 angeordneten Rohrleitung werden dem Anwender 7 Zusatzinformationen in der Datenbrille 4 visualisiert. Diese Zusatzinformationen I11, I12 bestehen aus Dokumentationsdaten, die bezüglich des ersten Punktes P1 Arbeitsanweisungen bezüglich dieses Rohrstücks enthalten und bezüglich des Punkte P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung E12 mitgeteilt wird. An der Datenbrille 4 ist darüber hinaus ein Mikrofon 11 angeordnet, über das der Anwender sprachgesteuert eine gezielte Auswahl der Dokumentationsdaten unterstützen kann.

Im folgenden werden Hintergrundinformationen zu Einsatzgebiet der Erfindung gegeben: Es geht dabei um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Augmented Reality, kurz AR, ist eine neue Art der Mensch-Technik-Interaktion mit großem Potential zur Unterstützung von industriellen Arbeitsprozessen. Bei dieser Technologie wird das Sichtfeld des Betrachters mit rechnergenerierten virtuellen Objekten angereichert, so daß Produkt- bzw. Prozeßinformationen intuitiv genutzt werden können. Neben der sehr einfachen Interaktion erschließt der Einsatz tragbarer Computer AR-Anwendungsfelder mit hohen Mobilitätsanforderungen, wenn beispielsweise Prozeß-, Meß- oder Simulationsdaten an das reale Objekt geknüpft werden.

Die Situation der deutschen Industrie ist durch steigende Kundenanforderungen an Individualität und Qualität der Produkte sowie durch eine wesentliche Zeitverkürzung der Entstehungsprozesse gekennzeichnet. Insbesondere in Entwicklung, Produktion und Service komplexer technischer Produkte und Anlagen können mit innovativen Lösungen für die Mensch-Technik-Interaktion sowohl Effizienz- und Produktivitätssprünge erzielt werden, als auch die Arbeit kompetenz- und lernförderlich gestaltet werden, indem der Wissens- und Informationsbedarf der Benutzer auf der Basis ohnehin vorliegender Daten situationsgerecht unterstützt wird.

Augmented Reality ist eine Technologie mit einer Vielzahl innovativer Anwendungsfelder:
- So kann z.B. in der **Entwicklung** ein "Mixed Mock-Up"-Ansatz auf der Grundlage einer gemischt-virtuellen Umgebung die frühen Entwicklungsphasen deutlich beschleunigen. Gegenüber immersiven, d.h. eintauchenden, "Virtual Reality"-(VR)-Lösungen besteht für den Benutzer ein wesentlicher Vorteil darin, daß die haptischen Eigenschaften mit Hilfe eines realen Modells naturgetreu abgebildet werden können, hingegen Aspekte der visuellen Wahrnehmung, z.B. für Anzeigenvarianten, virtuell manipulierbar sind. Darüber hinaus besteht ein großes Potential zur benutzerorientierten Validierung rechnergestützter Modelle, z.B. für die Bauteilverifikation oder bei Crash-Tests.
- In der flexiblen **Produktion** kann unter anderem das Einrichten von Maschinen für qualifizierte Facharbeiter wesentlich erleichtert werden, indem, z.B. durch mobile AR-Komponenten, gemischt-virtuelle Spannsituationen direkt im Sichtfeld wiedergegeben werden. Eine facharbeitergerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wahrgenommen werden. Das gleiche gilt auch für die Montage, wobei dem Monteur bereits in der Trainingsphase die einzelnen Arbeitsschritte gemischt-virtuell präsentierbar sind. In diesem Zusammenhang können, z.B. durch den Vergleich realer Montageabläufe mit Simulationsergebnissen, umfassende Optimierungen erreicht werden, die sowohl die Qualität der Arbeitsplanung verbessern als auch den Montageprozeß in der kritischen Anlaufphase vereinfachen und beschleunigen.
- Letztlich genügen im **Service** herkömmliche Technologien kaum mehr, um die komplexen Diagnose- und Behebungsprozeduren zu unterstützen und zu dokumentieren. Da diese Prozesse in vielen Bereichen aber ohnehin auf Basis von digitalen Daten geplant werden, bieten AR-Technologien die Möglichkeit, die Informationsquellen für die Wartung zu übernehmen und einem Techniker, z.B. in der Datenbrille, durch die Überlagerung mit realen Objekten den Ausbauvorgang zu erläutern. Mit Bezug auf kooperative Arbeit ermöglicht das AR-gestützte "Fernauge" eine verteilte Problemlösung, indem ein entfernter Experte mit dem Mitarbeiter vor Ort über globale Distanzen hinweg kommuniziert. Dieser Fall ist besonders für die überwiegend mittelständischen Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Besonderheit in der Mensch-Technik-Interaktion bei Augmented Reality liegt in einer sehr einfachen und intuitiven Kommunikation mit dem Computer, beispielsweise ergänzt durch multimodale Interaktionstechniken wie Sprachverarbeitung oder Gestikerkennung. Die Verwendung von tragbaren Computereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z.B. von Meß- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen AR-gestützt zu kooperieren.

Augmented Reality wird erst seit wenigen Jahren intensiv erforscht. Deshalb finden sich sowohl auf nationaler als auch internationaler Ebene nur wenige Anwendungen, zumeist in Form von wissenschaftlichen Prototypen bei Forschungseinrichtungen.
- *USA:* Wie bei vielen neuen Technologien wurden die Nutzungspotentiale von Augmented Reality zuerst in Nordamerika erschlossen. Beispiele sind die Cockpitgestaltung oder die Wartung von mechatronischen Geräten. Der Flugzeughersteller Boeing hat bereits erste Feldversuche im Bereich der Montage mit AR-Technologien unternommen. Ergebnis ist, daß den USA auch in diesem Hightech-Bereich eine Schlüsselstellung zukommt, die mit einer möglichen Technologieführerschaft einhergeht.
- *Japan:* In Japan werden verschiedene AR-Entwicklungen vorangetrieben, z.B. zur gemischt-virtuellen Gebäudeplanung, Telepräsenz oder "Cyber-Shopping". Keimzelle ist das 1997 gegründete Mixed Reality Systems Laboratory, das als Kompetenzzentrum gemeinsam von Wirtschaft und Wissenschaft getragen wird. Besondere Impulse im Konsumgüterbereich sind zukünftig durch die japanische Industrie für Unterhaltungselektronik zu erwarten.
- *Europa:* In Europa sind bislang nur sehr wenige Forschergruppen im AR-Bereich tätig. Eine Gruppe an der Universität Wien befaßt sich mit Ansätzen für die gemischt-reale Visualisierung. Die Gruppe des IGD hat im Rahmen des inzwischen ausgelaufenen ACTS-Projektes CICC erste Anwendungen für die Bauindustrie und einen wissenschaftlichen Prototypen zur Mitarbeiterschulung im Automobilbau entwickelt.

Die im Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen)

Zur Unterstützung bei der Komplexität und Vielfalt der Geräte/Systeme/Anlagen, die von Servicemitarbeitern/Facharbeitern (im folgenden "Personal") in den Phasen vom Systemaufbau/Inbetriebsetzung bis zur Wartung beherrscht werden muß, liegen heutzutage zumeist umfangreiche Dokumentationen vor. Im einzelnen handelt es sich hier um Handbücher, System- und Funktionsbeschreibungen, Installationshinweise, etc. Je nach Anwendung ergibt sich eine große Informationsvielfalt; der Zugriff auf die in konkreten Arbeitssituationen relevanten Beschreibungen ist oft mit erheblichem Aufwand verbunden.

Neben der Problematik einer geeigneten Unterstützung des Informationszugriffs ist heute keine adäquate Strukturierung der Dokumentation gegeben, die eine selektive Nutzung durch intelligentere Systeme, wie auf Basis von AR-Technologien, gezielt unterstützt. Derartige Systeme benötigen den Zugriff auf ausgewählte Informationsdetails, die situationsgerecht dem Anwender zur Verfügung gestellt werden. Auch in der elektronisch bereitgestellten Dokumentation erfolgt die Orientierung heute noch im wesentlichen an der Papierform.

Die Erfindung betrifft die geeignete Strukturierung und Bereitstellung von Dokumentation für die Nutzung durch intelligenter Unterstützungssysteme im oben genannten Sinn.

Dokumentationen werden schon heute elektronisch verfügbar gemacht. Mit einer geeigneten Strukturierung der Dokumente und adäquaten Zugriffsmechanismen (u.a. Hyperlinks) wird der DV-technische Zugang noch verbessert.

Erfindungsgemäß wird der Informationsgehalt der Dokumentation in unterscheidbare Einheiten gegliedert, wobei die Separation wesentlich unterstützt zu unterscheiden zwischen Daten, die auch auf realer Information basieren (d.h. beobachtbarer Information - z.B. Objektbild) und Daten, die Zusatzinformation darstellen (z.B. Objekteigenschaften, objektbezogene Hantierungshinweise, Konstruktionsanleitungen, etc.).

Durch eine solche "mehrschichtige" Strukturierung der Dokumentation wird die enthaltene Information selektiv verfügbar gemacht.

Insgesamt kommt es zur Bereitstellung eines Systems, das die datentechnische Strukturierung und Nutzung von Dokumentation in folgendem Sinn unterstützt:
- Die Dokumentation ist in mehreren Schichten (oder auch "Ebenen") organisiert; beispielsweise sind ein oder mehrere "statische Ebenen" vorstellbar (Skizzen, Bilder, Videos, ...) und darüberhinaus ein oder mehrere "Animations-ebenen" (Zusatzinformationen) mit unterschiedlich detailliertem und klassifizierten Informationsgehalt.
- Damit liegt eine Trennung des Informationsgehalts vor hinsichtlich dessen "was ohnehin sichtbar ist" (die gegebene Realität im Anwendungsfall) und dem "was zusätzlich nützlich ist" (Zusatzinformation / Informationsdetails).
- Der Zugriff auf die Information ist objektorientiert möglich, um situationsgerecht schnellen Zugang zu den benötigten Daten zu haben.

Ein Ausführungsbeispiel kommt im Kontext Nutzung AR-basierter Technologien mit automatischer Umgebungsidektifikation zum Einsatz: Die Darstellung eines Rohrleitungssystems, beispielhaft der Mittelteil im Rumpf eines Flugzeug, entspricht in diesem Fall der gegebenen Realität, die der Werker in seinem Einsatzumfeld vorfindet. Diese Situation wird vom Unterstützungssystem z.B. durch eine Kamera wahrgenommen/aufgezeichnet und dient u.a. zur Ermittlung des Einsatzkontextes ("welches Objekt betrachtet der Werker?"). Daraus leitet das AR-System die Zusatzinformation ab, die nun situations-entsprechend der mehrschichtig vorliegenden Dokumentation entnommen wird (d.h. zugeordnet dem beobachteten Objekt). Diese Zusatzinformation wird nun durch das Unterstützungs-System, in passender Überdeckung mit dem Realbild, dem Anwender ins Sichtfeld eingeblendet, z.B. die durchzuführenden Arbeitsschritte.

Ein weiteres Ausführungsbeispiel besteht im Kontext eher herkömmlicher Dokumentationsnutzung: Der Benutzer hat die Anwendungssituation selbst identifiziert und dem Unterstützungssystem vermittelt (z.B. durch BarCode-Identifikation oder herkömmliche DV-technisch unterstützte Auswahlmechanismen). Aus der mehrschichtig vorliegenden Dokumentationsbasis wird nun situtationsgemäß ein statisch vorliegendes Bild bzw. Video genutzt. Das Unterstützungssystem des Anwenders selektiert wiederum automatisch Zusatzinformation aus der mehrschichtigen Dokumentation, die aus einer weiteren, dem Situationsobjekt zugeordneten Ebene entstammt. Die Präsentation im Sichtfeld des Benutzers erfolgt nun durch Überlagerung dieser Informationsschichten (Bilder/Videos sowie Zusatzinformation).

Im Fall von Abbildung 3 würde beispielsweise eine Trennung von Informationen wie folgt vorliegen:
- reale, beobachtbare Information wäre in diesem Fall die Darstellung der Rohrleitungen im Hintergrund - dokumentiert entweder als statisches Bild oder auch als Video
- durch Zugriff auf eine separate Schicht der Dokumentation liegen die Daten der einblendbaren Hantierungshinweise vor
- wiederum separiert davon liegen Detailinformationen für die Durchführung des Arbeitsvorgangs oder technische Daten für das hantierte Objekt ("zu montierende Rohrleitung") vor.

Ein Einsatzgebiet besteht im Bereich Entwicklung, Produktion und Service auf der Basis von durchsichtigen Datenbrillen in Verbindung mit tragbaren Computern, als Beispielszenario für Augmented Reality-unterstützte Produktion oder als Augmented Reality für Service und Wartung.

Zusammenfassend betrifft die Erfindung somit System und ein Verfahren zur Dokumentationsverarbeitung insbesondere für technische und industrielle Anwendungen mit Speichermitteln 1 zur Speicherung von Dokumentationsdaten I1..In in mehreren Ebenen El..Em und mit Erfassungsmitteln 2 zur Erfassung von realen Informationen R, mit Zugriffsmitteln zum Zugriff auf die Dokumentationsdaten I1..In und mit Auswertemitteln A zur Auswertung der realen Information R und zur Auswahl der gespeicherten Dokumentationsdaten in Abhängigkeit der realen Informationen R. Hierdurch wird beispielsweise für Serviceanwendungen vor Ort, d.h. beispielsweise am Ort einer Automatisierungsanlage durch die Einbindung der Dokumentationsdaten I1..In als Augmented-Reality ein strukturierter und selektiver Zugriff auf die Dokumentationsdaten ermöglicht.

## Patentansprüche

1. System zur Dokumentationsverarbeitung mit Speichermitteln (1) zur Speicherung von Dokumentationsdaten "(I1..In) in mehreren Ebenen (E1..Em) und mit Erfassungsmitteln (2) zur Erfassung von realen Informationen (R), wobei die Erfassungsmittel mindestens eine Kamera zur Erfassung von Bildinformationen aufweisen, mit Zugriffsmitteln zum Zugriff auf die Dokumentationsdaten (I1..In) und mit Auswertemitteln (A) zur Auswertung der realen Information (R) und der erfassten Bildinformationen und zur Auswahl der gespeicherten Dokumentationsdaten in Abhängigkeit der realen Informationen (R) und der Bildinformationen.

2. System nach Anspruch 1,
**dadurch gekennzeichnet,**
**dass** die Auswertemittel (A) zur Auswertung der realen Information (R) in der Weise vorgesehen sind, dass aus der realen Information ein Objekt der Dokumentationsdaten ermittelt wird, und dass das System Visualisierungsmittel (B) zur Visualisierung der dem ermittelten Objekt der Dokumentationsdaten zugeordneten Dokumentationsdaten aufweist.

3. System nach einem der Ansprüche 1 oder 2,
**dadurch gekennzeichnet,**
**daß** die Erfassungsmittel (2) eine Bildaufnahmevorrichtung aufweisen, daß die Auswertemittel (A) zur Auswertung der realen Information (R) in der Weise vorgesehen sind, daß aus der realen Information ein Einsatzkontext ermittelt wird und daß das System Visualisierungsmittel (B) zur Visualisierung der Dokumentationsdaten aufweist.

4. System nach einem der Ansprüche 1 bis 3,
**dadurch gekennzeichnet,**
**daß** die Erfassungsmittel (2) anwendergesteuert sind.

5. System nach einem der Ansprüche 1 bis 4,
**dadurch gekennzeichnet,**
**dass** die Erfassungsmittel (2) eine an einer Datenbrille (4) angeordnete Kamera enthalten und dass die Visualisierungsmittel eine in der Datenbrille (4) angeordnete Visualisierungseinrichtung enthalten.

6. Verfahren zur Dokumentationsverarbeitung, bei dem Dokumentationsdaten (I1..In) in mehreren Ebenen (E1..Em) gespeichert werden und reale Informationen (R) mit Erfassungsmitteln (2) erfaßt werden, wobei die Erfassungsmittel mindestens eine Kamera zur Erfassung von Bildinformationen aufweisen, bei welchem Verfahren auf die Dokumentationsdaten (I1..In) in der Weise zugegriffen wird, daß die realen Informationen (R) und die erfassten Bildinformationen ausgewertet werden und in Abhängigkeit der realen Informationen (R) und der Bildinformationen die gespeicherten Dokumentationsdaten (I1..In) ausgewählt werden.

7. Verfahren nach Anspruch 6,
**dadurch gekennzeichnet,**
**dass** die Auswertemittel (A) die realen Information (R) in der Weise auswerten, dass aus der realen Information ein Objekt der Dokumentationsdaten ermittelt werden kann, und dass mit Visualisierungsmitteln (B) die dem ermittelten Objekt der Dokumentationsdaten zugeordneten Dokumentationsdaten visualisiert werden.

8. Verfahren nach einem der Ansprüche 6 oder 7,
**dadurch gekennzeichnet,**
**daß** die realen Informationen mittels einer Bildaufnahmevorrichtung erfaßt werden, daß aus der realen Information ein Einsatzkontext ermittelt wird und daß die ermittelten Dokumentationsdaten (I1..In) über Visualisierungsmittel (B) visualisiert werden.

9. Verfahren nach einem der Ansprüche 6 bis 8,
**dadurch gekennzeichnet,**
**daß** die Erfassungsmittel (2) anwendergesteuert sind.

10. Verfahren nach einem der Ansprüche 6 bis 9,
**dadurch gekennzeichnet,**
**daß** die Erfassungsmittel (2) eine an einer Datenbrille (4) angeordnete Kamera enthalten und dass die Visualisierungsmittel eine in der Datenbrille (4) angeordnete Visualisierungseinrichtung enthalten.

## Claims

1. A system for documentation processing with storage means (1) for storing documentation data (Il..In) on several levels (E1..Em) and with acquisition means (2) for acquiring real information (R), with the acquisition means having at least one camera for acquiring visual information with access means for accessing the documentation data (I1..In) and with evaluation means (A) for evaluating the real information (R) and recorded visual information and for selecting the stored documentation data in dependence on the real information (R)and the visual information.

2. The system as claimed in claim 1, **characterized in that** the evaluation means (A) for evaluating the real information (R) is provided such that an object of the documentation data is determined from the real information and that the system has visualization means (B) for visually presenting the documentation data assigned to the object of the documentation data determined.

3. The system as claimed in one of claims 1 or 2, **characterized in that** the acquisition means (2) have an image-capturing device, **in that** the evaluation means (A) for the evaluation of the real information (R) are provided in such a way that a context of use is determined from the real information and **in that** the system has visualizing means (B) for visually presenting the documentation data.

4. The system as claimed in one of claims 1 to 3, **characterized in that** the acquisition means (2) are user-controlled.

5. The system as claimed in one of claims 1 to 4, **characterized in that** the acquisition means (2) feature a camera arranged on a head-mounted display (4) and the visualizing means incorporate a visualization device arranged in the head-mounted display (4).

6. A method for documentation processing in which documentation data (I1..In) are stored on several levels (E1..Em) and real information (R) is acquired by acquisition means (2), where the acquisition means has at least one camera for recording visual information, in which the documentation data (I1..In) are accessed in such a way that the real information (R) and the recorded visual information are evaluated and the stored documentation data (I1..In) are selected in dependence on the real information (R) and the visual information.

7. The method as claimed in claim 6, **characterized in that** the evaluation means (A) evaluate the real information (R) in such a way that an object of the documentation data can be determined from the real information and that with visualization means (B) the documentation data assigned to the object determined from the documentation data can be visually presented.

8. The method as claimed in one of claims 6 or 7, **characterized in that** the real information is captured by an image capturing device, that a usage concept is determined from the real information and that the determined documentation data (I1..In) is visually presented using visualization means (B).

9. The method as claimed in one of claims 6 to 8, **characterized in that** the acquisition means (2) are user-controlled.

10. The method as claimed in one of claims 6 to 9, **characterized in that** the acquisition means (2) feature a camera arranged on a head-mounted display (4) and the visualizing means incorporate a visualization device arranged in the head-mounted display (4).

## Revendications

1. Système de traitement de documentation avec des moyens de mémorisation (1) pour mémoriser des données documentaires (I1 à In) dans plusieurs niveaux (E1 à Em) et avec des moyens de détection (2) pour détecter des informations réelles (R), dans lequel les moyens de détection comportent au moins une caméra pour détecter des informations vidéo, des moyens d'accès pour accéder aux données documentaires (I1 à In) et des moyens d'évaluation (A) pour évaluer les informations réelles (R) et les informations vidéo détectées et pour sélectionner les données documentaires mémorisées en fonction des informations réelles (R) et des informations vidéo.

2. Système selon la revendication 1,
**caractérisé par le fait que** les moyens d'évaluation (A) pour évaluer l'information réelle (R) sont prévus de telle sorte qu'un objet des données documentaires est déterminé à partir de l'information réelle et que le système comporte des moyens de visualisation (B) pour visualiser les données documentaires associées à l'objet déterminé des données documentaires.

3. Système selon l'une des revendications 1 ou 2,
**caractérisé par le fait que** les moyens de détection (2) comportent un dispositif d'enregistrement d'image, que les moyens d'évaluation (A) pour évaluer l'information réelle (R) sont prévus de telle sorte qu'un contexte d'utilisation est déterminé à partir de l'information réelle et que le système comporte des moyens de visualisation (B) pour visualiser les données documentaires.

4. Système selon l'une des revendications 1 à 3,
**caractérisé par le fait que** les moyens de détection (2) sont commandés par l'utilisateur.

5. Système selon l'une des revendications 1 à 4,
**caractérisé par le fait que** les moyens de détection (2) contiennent une caméra agencée sur des lunettes de données (4) et que les moyens de visualisation contiennent un dispositif de visualisation agencé dans les lunettes de données (4).

6. Procédé de traitement de documentation,
dans lequel des données documentaires (I1 à In) sont mémorisées dans plusieurs niveaux (E1 à Em) et des informations réelles (R) sont détectées avec des moyens de détection (2), les moyens de détection comportant au moins une caméra pour détecter des informations vidéo, et
dans lequel on accède aux données documentaires (I1 à In) de telle sorte qu'on évalue les informations réelles (R) et les informations vidéo détectées et qu'on sélectionne en fonction des informations réelles (R) et des informations vidéo les données documentaires (I1 à In) mémorisées.

7. Procédé selon la revendication 6,
**caractérisé par le fait que** les moyens d'évaluation (A) évaluent l'information réelle (R) de telle sorte qu'on peut déterminer un objet des données documentaires à partir de l'information réelle et qu'on peut visualiser avec des moyens de visualisation (B) les données documentaires associées à l'objet déterminé des données documentaires.

8. Procédé selon l'une des revendications 6 ou 7,
**caractérisé par le fait qu'**on détecte les informations réelles au moyen d'un dispositif d'enregistrement d'image, qu'on détermine un contexte d'utilisation à partir de l'information réelle et qu'on visualise les données documentaires déterminées (I1 à In) par l'intermédiaire de moyens de visualisation (B).

9. Procédé selon l'une des revendications 6 à 8,
**caractérisé par le fait que** les moyens de détection (2) sont commandés par l'utilisateur.

10. Procédé selon l'une des revendications 6 à 9,
**caractérisé par le fait que** les moyens de détection (2) contiennent une caméra agencée sur des lunettes de données (4) et que les moyens de visualisation contiennent un dispositif de visualisation agencé dans les lunettes de données (4).
